# EUROPÄISCHE PATENTSCHRIFT

(11) **EP 3 524 790 B1**
(45) Veröffentlichungstag und Bekanntmachung des Hinweises auf die Patenterteilung: **10.01.2024**
(21) Anmeldenummer: 19152751.4
(22) Anmeldetag: 21.01.2019
(51) Int. Cl.: F01N 13/00, B60K 13/04

(54) **SCHALLDÄMPFER**
MUFFLER
SILENCIEUX

(30) Priorität: 08.02.2018 DE 102018102845
(43) Veröffentlichungstag der Anmeldung: 14.08.2019
(73) Patentinhaber: MAN Truck & Bus SE, 80995 München (DE)
(72) Erfinder: Wales, Dirk, 82140 Olching (DE)
(74) Vertreter: v. Bezold & Partner Patentanwälte - PartG mbB

(56) Entgegenhaltungen:
- US-A1- 2016 318 388
- US-A1- 2018 238 220

## Beschreibung

Die Erfindung betrifft einen Schalldämpfer, vorzugsweise einen Abgasschalldämpfer zur Abgasnachbehandlung, für ein Fahrzeug, vorzugsweise ein Nutzfahrzeug. Ferner betrifft die Erfindung ein Fahrzeug, vorzugsweise ein Nutzfahrzeug, mit einem derartigen Schalldämpfer.

Gerade im Nutzfahrzeugbereich erleichtern Trittstufen den Auf-/Abstieg zu/von Fahrzeugbereichen, beispielsweise den Laufsteg hinter dem Fahrerhaus, im Zuge von Kontroll- und/oder Bedienvorgängen sowie das Begehen bzw. Verlassen des Fahrerhauses. Hierfür sind meist zusätzliche Aufstiegskonstruktionen, beispielsweise in Form von Steigleitern oder Trittstufen, an den Fahrzeugen angebracht. Derartige separate Aufstiegskonstruktionen erhöhen allerdings die allgemeinen Kosten für die Fahrzeugherstellung und zudem auch den Montageaufwand, da diese Konstruktionen zusätzlich zu den fahrzeugüblichen Bauteilen angebracht werden müssen.

Aus dem Dokument US 2016/318388 A1 ist eine Montageanordnung zur Abgasnachbehandlung bekannt, die außerhalb eines Motorraums montiert ist und ein perforierte Gehäuse aufweist. Das Gehäuse ist dabei so konfiguriert, dass ein Kontakt der heißen Komponenten durch Bediener und/oder brennbare Materialien verhindert wird, während Luft von außen durch die Löcher ins Gehäuse strömen kann, um die dort befindlichen Komponenten der Abgasnachbehandlung zu kühlen.

Weiterhin offenbart die US 2018/238220 A1 eine Arbeitsmaschine mit einer Abgasreinigungsvorrichtung, die eine selektive katalytische Reduktionsvorrichtung und eine Reduktionsmitteleinspritzvorrichtung aufweist. Die Arbeitsmaschine umfasst hierbei eine Gehäuse, das einen Motorraum abgrenzt, in dem der Motor und die Abgasreinigungsvorrichtung untergebracht sind. Das Gehäuse enthält eine Deckplatte, die den Maschinenraum über dem Motor abdeckt, und einen Abluftkanal, der in der Deckplatte vorgesehen ist und die Luft im Maschinenraum nach außen abführt.

Es ist daher Aufgabe der Erfindung, einen im Vergleich zum Stand der Technik verbesserten Aufstieg bereitzustellen. Insbesondere ist es eine Aufgabe der Erfindung, eine kostengünstige und bauraumeinsparende Aufstiegskonstruktion bereitzustellen, die den Montageaufwand reduziert.

Diese Aufgaben werden durch eine Vorrichtung mit den Merkmalen des unabhängigen Anspruchs gelöst. Dieser betrifft einen Abgasschalldämpfer zur Abgasnachbehandlung für ein Fahrzeug, vorzugsweise Nutzfahrzeug, wobei der Abgasschalldämpfer eine Trittfläche aufweist. Der Abgasschalldämpfer ist gekennzeichnet durch eine Außenwandung des Abgasschalldämpfers, die eine Einbuchtung aufweist, bei der ein unterer Wandungsabschnitt als Trittfläche ausgebildet ist und/oder in der die Trittfläche klappbar oder schwenkbar gelagert ist und/oder in der die Trittfläche, vorzugsweise als Trittstufe, fest montiert ist. Vorteilhafte Ausführungsformen und Anwendungen der Erfindung ergeben sich aus den abhängigen Ansprüchen und werden in der folgenden Beschreibung unter teilweiser Bezugnahme auf die Figuren näher erläutert.

Der Erfindung liegt dabei die Idee zugrunde, einen Schalldämpfer, vorzugsweise Abgasschalldämpfer zur Abgasnachbehandlung, der aufgrund seiner Konstruktion für höhere Belastungen als das menschliche Gewicht ausgelegt ist, zusätzlich mit Trittflächen auszustatten, um dadurch Bauteile für eine separate Aufstiegskonstruktion einzusparen. Der Schalldämpfer verfügt damit über eine Doppelfunktion: Einerseits dient er dazu, Schallemissionen, vorzugsweise des Abgasnachbehandlungssystems, zu vermindern, und andererseits verfügt er über Trittflächen, um damit dem Zugang zu höher liegenden Bereichen zu erleichtern, wofür ansonsten zusätzliche Aufstiege benötigt werden würden. Dadurch werden sowohl die Kosten als auch der Montageaufwand für einen Aufstieg reduziert, da mit der Montage des Schalldämpfers gleichzeitig auch eine Trittstufe am Fahrzeug angebracht wird.

Gemäß allgemeinen Gesichtspunkten der Erfindung wird ein Abgasschalldämpfer zur Abgasnachbehandlung für ein Fahrzeug, vorzugsweise Nutzfahrzeug bereitgestellt. Der Schalldämpfer weist dabei mindestens eine Trittfläche auf, d. h. eine Fläche zum Darauftreten bzw. zum Daraufsetzen zumindest eines Teils eines menschlichen Fußes. Die Trittfläche kann hierzu als Trittstufe oder Trittplatte ausgebildet sein. Vorzugsweise ist der eine Trittfläche aufweisende Schalldämpfer dafür ausgelegt, die Belastung durch eine mindestens 70 kg schwere Person, die auf der Trittfläche steht, aufzunehmen bzw. weiterzuleiten. Als Schalldämpfer wird dabei ein Bauteil zu Verminderung von Schallemissionen, vorzugsweise im Frequenzbereich zwischen 20 Hz - 20 kHz, verstanden. Neben der Verminderung von Schallemissionen soll der Schalldämpfer auch eine abgasreinigende Funktion umfassen. Mit anderen Worten kann es sich somit bei der beanspruchten Vorrichtung auch um eine Vorrichtung zur Abgasnachbehandlung handeln, die ein Gehäuse umfasst, in dem mehrere Komponenten zur Abgasnachbehandlung (z. B. SCR-Katalysator, Partikelfilter etc.) untergebracht sind, die zumindest teilweise eine schalldämpfende Funktion umfassen. Eine derartige Anordnung wird im Folgenden auch kurz als Schalldämpfer bezeichnet. Der eigentliche Schalldämpfer selbst kann wiederum Ein- und Ausströmöffnungen für ein gasförmiges Medium sowie eine Innenkonstruktion zur Gasstromführung (z. B. ein Rohrsystem) umfassen. Zudem kann der Schalldämpfer ein Filtermaterial zur Geräuschreduzierung und/oder Resonatorkammern und/oder strömungsregulierende Komponenten umfassen. Bei dem Schalldämpfer kann es sich um einen Reflexions- und/oder Absorptionsschalldämpfer handeln.

Ferner umfasst der Schalldämpfer eine Außenwandung, d. h. eine die Innenkonstruktion zur Gasstromführung (z. B. ein Rohrsystem) zumindest abschnittsweise umgebende bzw. begrenzende feste Hülle, wobei an diese Außenwandung die Trittfläche, vorzugsweise Trittstufe, klappbar oder schwenkbar angelenkt und/oder festmontiert sein kann. Damit übernimmt die Außenwandung nicht nur eine Schutzfunktion der Bauteile im Inneren, sondern auch eine tragende Funktion, indem Lasten, die durch das Gewicht der auf der Trittfläche stehenden Personen entstehen, aufgenommen bzw. weitergeleitet werden. Die bewegliche Montage der Trittfläche, welche vorzugsweise als Trittstufe ausgebildet ist, kann hierbei mittels eines oder mehrerer Scharniere erfolgen. Um den Luftwiderstand zu reduzieren, kann insbesondere vorgesehen sein, dass die Trittfläche im eingeklappten Zustand möglichst bündig an der Außenwandung anliegt und nur zum Betreten ausgeklappt wird. Die feste Montage der Trittfläche kann durch Schweißen, Löten und/oder Kleben erfolgen. Ferner können hierzu auch geeignete Befestigungsmittel wie Schrauben und/oder Nieten vorgesehen sein. Vorteilhaft ist, dass durch die Integration der Trittfläche in den Schalldämpfer Bauteile für einen separaten Aufstieg eingespart werden können.

Ferner ist bevorzugt vorgesehen, dass die Trittfläche durch einen Wandungsabschnitt der Außenwandung gebildet wird. Hierzu kann die Außenwandung eine Trittfläche in Form eines Vorsprungs und/oder Absatzes umfassen. Im Unterschied zur restlichen Außenwand kann dabei der die Trittfläche bildende Wandungsabschnitt durch seine im Wesentlichen horizontale Lage, durch seine Fläche, auf der zumindest teilweise ein menschlicher Fuß aufgesetzt werden kann, und durch seine Stabilität, die Belastung durch das Gewicht eines Menschen auszuhalten, charakterisiert werden. Vorteilhaft an der Ausbildung eines Wandungsabschnitts der Außenwandung zur Trittfläche ist, dass dadurch keine zusätzlichen Befestigungselemente zur Montage der Trittfläche benötigt werden.

Ferner weist die Außenwandung des Schalldämpfers eine Einbuchtung auf. Diese kann in Form eines zumindest teilweise nach innen, d. h. in Richtung der Innenkonstruktion zur Gasstromführung, gewölbten Abschnitts der Außenwandung ausgebildet sein. Ferner kann die Einbuchtung durch Tiefziehen der Außenwandung selbst oder durch einen zusätzlichen topfartigen Einsatz, der dicht in eine entsprechende Öffnung der Außenwandung des Schalldämpfers eingelassen ist, ausgebildet sein. Weiterhin ist vorgesehen, dass bei der Einbuchtung der Außenwandung ein unterer Wandungsabschnitt als Trittfläche ausgebildet ist. Der Begriff "unterer" bezieht sich hierbei auf die Orientierung bezüglich der Schwerkraftrichtung. Auch bei dieser Ausführungsform besitzt die Trittfläche vorzugsweise eine im Wesentlichen horizontale Lage, eine Fläche, auf der zumindest teilweise ein menschlicher Fuß aufgesetzt werden kann, und eine Stabilität, die Belastung durch das Gewicht eines Menschen auszuhalten. Der Vorteil des Anbringens der Trittfläche in einer Einbuchtung in der Außenwandung liegt darin, dass dadurch die Außenabmessungen des Schalldämpfers und damit dessen Luftwiderstand nicht vergrößert werden.

Zudem oder alternativ ist die Trittfläche klappbar oder schwenkbar in der Einbuchtung gelagert. D. h., die bewegliche Verbindung zwischen Trittfläche und der Außenwandung des Schalldämpfers, beispielsweise in Form eines Gelenks, liegt im Wesentlichen im Bereich der Einbuchtung. Die Trittfläche selbst kann allerdings vor allem im ausgeklappten Zustand auch aus der Einbuchtung ragen. Besonders vorteilhaft ist zudem, wenn die Trittfläche im eingeklappten Zustand die Öffnung der Einbuchtung in der Außenwandung im Wesentlichen verschließt. Die bewegliche Montage der Trittfläche kann zudem mittels eines oder mehrerer Scharniere erfolgen.

Zudem oder alternativ ist die Trittfläche, vorzugsweise als Trittstufe, fest in der Einbuchtung montiert. Dabei kann die Montage der Trittfläche durch Schweißen, Löten und/oder Kleben erfolgen. Ferner können hierzu auch geeignete Befestigungsmittel wie Schrauben und/oder Nieten vorgesehen sein. Um den Luftwiderstand der Vorrichtung möglichst zu reduzieren, kann die Tiefe der Trittfläche kleiner oder gleich der Tiefe der Einbuchtung sein, damit die Trittfläche nicht aus der Ausbuchtung ragt.

Ferner kann der Schalldämpfer mehrere der oben beschriebenen Trittflächen umfassen. Dabei können einerseits in einer Einbuchtung mehrere Trittflächen angebracht sein, beispielsweise kann ein unterer Wandungsabschnitt der Einbuchtung der Außenwandung als Trittfläche ausgebildet sein und zusätzlich dazu eine Trittfläche in der Einbuchtung fest montiert sein. Andererseits kann ein Schalldämpfer auch mehrere Einbuchtungen mit Trittflächen und/oder mehrere Trittflächen, die nicht in einer Einbuchtung der Außenwandung angebracht sind, umfassen. Beispielsweise kann eine Trittfläche klappbar und eine fest an die Außenwandung des Schalldämpfers montiert sein.

Gemäß einer weiterentwickelten Ausführungsform ist ferner die Einbuchtung als quaderförmiger Hohlraum ausgebildet, d. h., die Einbuchtung der Außenwandung umfasst im Wesentlichen rechteckige Grund-, Deck- und Seitenflächen, die senkrecht aufeinanderstehen, wobei vorzugsweise die Grundfläche als Trittfläche ausgebildet ist. Als Hohlraum wird in diesem Zusammenhang das Volumen verstanden, das durch die Öffnung der Einbuchtung und den Teil der Außenwandung, der die Einbuchtung bildet, begrenzt wird. Neben der Ausbildung als Quader kann der durch die Einbuchtung erzeugte Hohlraum auch beliebige andere Formen besitzen.

Zudem oder alternativ umfasst die Einbuchtung eine Tiefe von mindestens 10 cm. Als Tiefe der Einbuchtung soll hierbei der Abstand vom am weitesten innen liegenden Punkt der Einbuchtung bis zu der den Beginn der Einbuchtung markierenden Öffnung verstanden werden. Das Merkmal soll auf vorteilhafte Weise sicherstellen, dass für einen sicheren Stand ein genügend großer Teil des menschlichen Fußes in die Einbuchtung eingeführt werden kann.

Zudem oder alternativ umfasst die Einbuchtung eine Breite von mindestens 10 cm. Diese Angabe der Breite bezieht sich dabei auf die Größe der die Einbuchtung markierenden Öffnung in der Außenwandung. Auch dieses Merkmal stellt auf vorteilhafte Weise sicher, dass zumindest ein Teil eines menschlichen Fußes in der Einbuchtung platziert werden kann.

Ferner ist bevorzugt vorgesehen, dass die Trittfläche des Schalldämpfers so bemessen ist, dass auf dieser zumindest der Zehenbereich der Sohle eines menschlichen Fußes aufgesetzt werden kann. Mit anderen Worten besitzt der nutzbare Auftritt, der zum Aufsetzen des Fußes ausgebildet ist, eine Fläche, auf die zumindest der Zehenbereich der Sohle eines menschlichen Fußes aufgesetzt werden kann. Vorzugsweise besitzt die Trittfläche hierfür eine Breite von mindestens 10 cm und eine Tiefe von mindestens 10 cm.

Gemäß eines weiteren Aspekts umfasst die Trittfläche eine Oberfläche zur Erhöhung der Rutschsicherheit. Hierzu können an der Trittfläche Strukturen und/oder Beschichtungen angebracht sein, die ein Ausgleiten oder Hinfallen der auf der Trittfläche stehenden Person möglichst verhindern. Beispielsweise kann die Trittfläche hierzu eine Riffelung und/oder eine reibungserhöhende Oberfläche umfassen. Auf vorteilhafte Weise wird damit ein sicherer Stand für die auf der Trittfläche stehende Person erreicht.

Um die eben genannte rutschhemmende Wirkung der Trittflächenoberfläche zu erzielen, sieht eine Weiterentwicklung der Erfindung vor, dass die Trittfläche ein Riffelblech und/oder ein Tränenblech und/oder ein Linsenblech und/oder ein Warzenblech umfasst. Diese können dabei als zusätzliche Bauteile an der Trittfläche befestigt sein oder integral mit der Trittfläche verbunden sein, d. h. aus dieser geformt werden. Alternativ können auch Oberflächen mit anderen Formen und Strukturen verwendet werden, die die Rutschsicherheit verbessern.

In einer weiteren Ausführungsform sind an der Außenwandung des Schalldämpfers zusätzlich ein oder mehrere Abschirmbleche angebracht. Diese können zusätzlich zur Außenwandung zum Schutz vor Verschmutzung und/oder zum Verhindern eines Eindringens von Feuchtigkeit dienen. Ferner können die Abschirmbleche zur Abschirmung von Wärmestrahlung dienen. Die Abschirmbleche können zudem Öffnungen, vorzugsweise im Bereich der Trittflächen, umfassen, um ein Auftreten auf die Trittflächen zu ermöglichen. Die Abschirmbleche können eine größere und/oder kleinere Ausdehnung als der Schalldämpfer besitzen.

Um den Schalldämpfer an ein Fahrzeug zu montieren, ist ferner bevorzugt vorgesehen, dass der Schalldämpfer eine Montageeinrichtung zum Befestigen des Schalldämpfers an einer tragenden Struktur eines Fahrzeugs umfasst. Beispielsweise können hierfür Öffnungen in der Außenwandung zum Anbringen von Befestigungsmitteln vorgesehen sein. Ferner können am Schalldämpfer Schienen oder Vorsprünge eingeschweißt oder eingeschraubt sein, um die Montage zu erleichtern. Vorzugsweise ist die Montageeinrichtung an einem Teil des Schalldämpfers angeordnet, der dem die Trittfläche aufweisenden Bereich der Außenwandung abgewandt ist. Alternativ kann die Montageeinrichtung auch seitlich zu dem die Trittfläche aufweisenden Bereich der Außenwandung am Schalldämpfer angeordnet sein.

Die Erfindung betrifft darüber hinaus ein Fahrzeug, vorzugsweise Nutzfahrzeug, das einen Schalldämpfer wie in diesem Dokument beschrieben umfasst. Vorzugsweise ist der Schalldämpfer dabei so angebracht, dass die Trittflächen bzw. die Einbuchtungen mit Trittflächen von außen am Fahrzeug zugänglich sind. Vorteilhaft daran ist, dass so der Zugang zu hoch liegenden Fahrzeugbereichen, beispielsweise den Laufsteg hinter dem Fahrerhaus eines Sattelzugs, ermöglicht wird, ohne dass zusätzlich zu dem sowieso vorhandenen Schalldämpfer weitere Aufstiegskonstruktionen montiert werden müssen, deren Kosten eingespart werden können.

Ferner betrifft die Erfindung ein Nutzfahrzeug mit einem Tragrahmen, an dem ein Schalldämpfer, wie er in diesem Dokument beschrieben ist, befestigt ist, wobei zusätzlich im Bereich seitlich und/oder oberhalb der Befestigungsstelle des Schalldämpfers ein oder mehrere Griffelemente und/oder ein oder mehrere Holmelemente am Fahrzeug angebracht sind. Diese können dabei sowohl am Schalldämpfer selbst als auch an weiteren im Bereich des Schalldämpfers montierten Fahrzeugteilen angebracht sein. Vorzugsweise ist damit mindestens ein fester Handlauf bzw. mindestens eine Festhalte seitlich und/oder oberhalb der Befestigungsstelle des Schalldämpfers am Fahrzeug montiert. Auf vorteilhafte Weise wird dadurch der Auf- bzw. Abstieg über die Trittflächen erleichtert.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügte Zeichnung beschrieben.

Es zeigen:
- Figur 1: eine schematische Darstellung einer Ausführungsform eines Schalldämpfers, bei der ein unterer Wandungsabschnitt einer Einbuchtung in der Außenwandung als Trittstufe ausgebildet ist;
- Figur 2: eine Ausführungsform eines Schalldämpfers mit zwei Trittflächen, wobei der Schalldämpfer an einem Tragrahmenteil befestigt ist;
- Figur 3: eine Ausführungsform eines Schalldämpfers mit Trittfläche, der zusätzlich ein Abschirmblech umfasst; und
- Figur 4: ein schematisch dargestelltes Nutzfahrzeug mit einem im Bereich zwischen erster und zweiter Fahrzeugachse montierten Schalldämpfer mit Trittfläche.

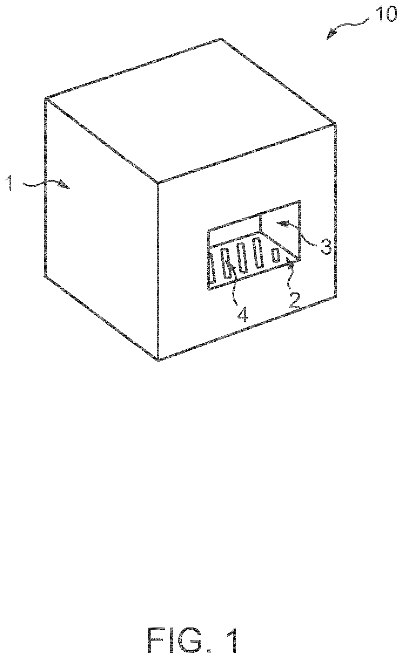

In Figur 1 ist ein Schalldämpfer 10 mit Trittstufe 2 nach einer Ausführungsform der Erfindung gezeigt. Der Schalldämpfer 10 umfasst dabei eine Außenwandung 1, die an einer Seitenfläche eine quaderförmige Einbuchtung 3 aufweist. Der untere Wandungsabschnitt der Einbuchtung 3 ist ferner als Trittfläche 2 ausgebildet, sodass zumindest der Zehenbereich der Sohle eines menschlichen Fußes auf die Trittfläche 2 aufgesetzt werden kann. Zusätzlich weist die Trittfläche 2 eine Oberfläche zur Erhöhung der Rutschsicherheit 4 in Form länglicher Riffel auf.

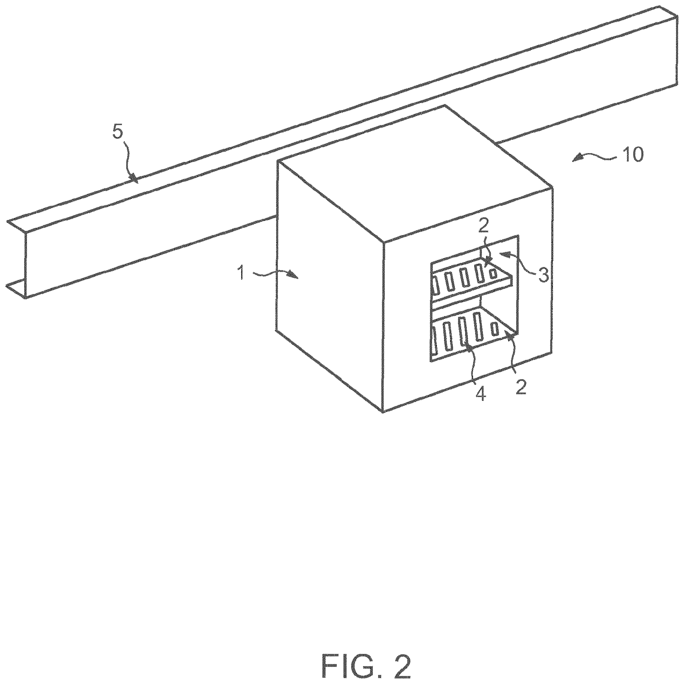

Figur 2 zeigt eine weitere Ausführungsform eines Schalldämpfers 10, bei dem eine Einbuchtung 3 der Außenwandung 1 einer Seitenfläche zwei Trittflächen 2 umfasst. Zum einen ist dabei analog zum Fall in Figur 1 der untere Wandungsabschnitt der Einbuchtung 3 als Trittfläche 2 ausgebildet, zum anderen weist die Einbuchtung 3 eine zweite Trittfläche 2 in Form einer festmontierten Trittplatte auf. Als weiteren Unterschied zu Figur 1 zeigt Figur 2 den Schalldämpfer 10 an einen Teil eines Tragrahmens 5 eines Nutzfahrzeugs 20 befestigt. Die Befestigungsstelle befindet sich dabei an einem rückseitigen Bereich des Schalldämpfers 10, der dem die Trittfläche 2 aufweisenden vorderen Teil der Außenwandung 1 abgewandt ist.

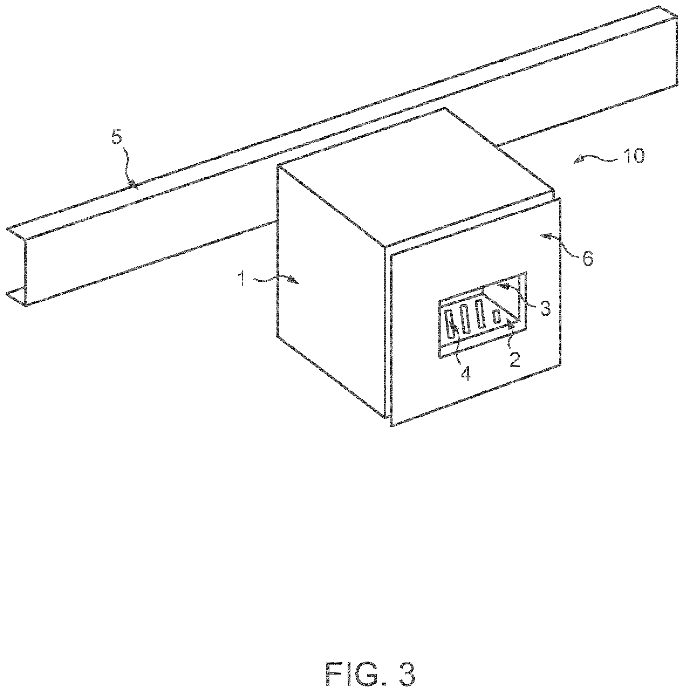

In Figur 3 ist ein Schalldämpfer 10 nach einem Ausführungsbeispiel der Erfindung dargestellt. Im Unterschied zu den bisherigen Ausführungsbeispielen umfasst der in Figur 3 gezeigte Schalldämpfer 10 ein Abschirmblech 6. Dieses weist eine im Wesentlichen rechteckförmige Form auf und bedeckt nahezu komplett den vorderen Teil der Außenwandung 1, welcher die Einbuchtung 3 umfasst. Lediglich um den Auftritt auf die Trittfläche zu ermöglichen, ist im Bereich der Einbuchtung 3 eine Öffnung im Abschirmblech 6 angebracht, deren Öffnungsquerschnitt dem Öffnungsquerschnitt der Einbuchtung 3 entspricht.

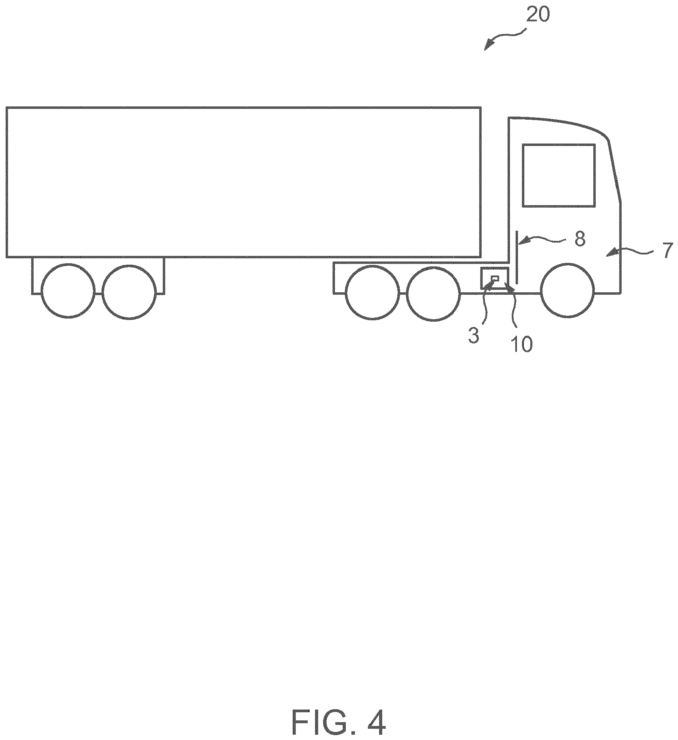

Figur 4 zeigt ein Nutzfahrzeug 20 mit einem Schalldämpfer 10 mit einer quaderförmigen Einbuchtung 3, deren unterer Wandungsabschnitt als Trittfläche 2 ausgebildet ist. Der Schalldämpfer 10 ist dabei exemplarisch auf der rechten Fahrzeugseite zwischen der ersten und zweiten Achse des Sattelzugs montiert und ermöglicht damit einen Aufstieg zum Laufsteg hinter dem Fahrerhaus 7. Alternativ kann der Schalldämpfer 10 auch auf der linken Fahrzeugseite sowie an anderen Montagepositionen angebracht sein. Zusätzlich ist im Bereich des Schalldämpfers 10 am Fahrerhaus 7 ein Griff 8 angebracht, der den Aufstieg erleichtern soll.

### Bezugszeichenliste

- 1: Außenwandung
- 2: Trittfläche
- 3: Einbuchtung
- 4: Oberfläche zur Erhöhung der Rutschsicherheit
- 5: Träger
- 6: Abschirmblech
- 7: Fahrerhaus
- 8: Griff
- 10: Schalldämpfer
- 20: Nutzfahrzeug

## Patentansprüche

1. Abgasschalldämpfer (10) zur Abgasnachbehandlung für ein Fahrzeug, vorzugsweise Nutzfahrzeug (20), wobei der Abgasschalldämpfer (10) eine Trittfläche (2) aufweist; **gekennzeichnet durch** eine Außenwandung (1) des Abgasschalldämpfers (10), die eine Einbuchtung (3) aufweist,
a) wobei bei der Einbuchtung (3) ein unterer Wandungsabschnitt als Trittfläche (2) ausgebildet ist und/oder
b) wobei die Trittfläche (2) klappbar oder schwenkbar in der Einbuchtung (3) gelagert ist und/oder
c) wobei die Trittfläche (2), vorzugsweise als Trittstufe, fest in der Einbuchtung (3) montiert ist.

2. Abgasschalldämpfer (10) nach Anspruch 1, **dadurch gekennzeichnet, dass** die Einbuchtung (3)
a) als quaderförmiger Hohlraum ausgebildet ist und/oder
b) eine Tiefe von mindestens 10 cm umfasst und/oder
c) eine Breite von mindestens 10 cm umfasst.

3. Abgasschalldämpfer (10) nach einem der vorherigen Ansprüche, **dadurch gekennzeichnet, dass** die Trittfläche (2) so bemessen ist, dass auf dieser zumindest der Zehenbereich der Sohle eines menschlichen Fußes aufgesetzt werden kann.

4. Abgasschalldämpfer (10) nach einem der vorherigen Ansprüche, **dadurch gekennzeichnet, dass** die Trittfläche (2) eine Oberfläche zur Erhöhung der Rutschsicherheit (4) umfasst.

5. Abgasschalldämpfer (10) nach Anspruch 4, **dadurch gekennzeichnet, dass** die Trittfläche (2)
a) ein Riffelblech und/oder
b) ein Tränenblech und/oder
c) ein Linsenblech und/oder
d) ein Warzenblech
umfasst.

6. Abgasschalldämpfer (10) nach einem der vorherigen Ansprüche, **dadurch gekennzeichnet, dass** an der Außenwandung (1) zusätzlich ein oder mehrere Abschirmbleche (6) angebracht sind.

7. Abgasschalldämpfer (10) nach einem der vorherigen Ansprüche, **dadurch gekennzeichnet, dass** der Abgasschalldämpfer (10) eine Montageeinrichtung zur Befestigung des Abgasschalldämpfers an einer tragenden Struktur eines Fahrzeugs umfasst.

8. Abgasschalldämpfer (10) nach einem der vorherigen Ansprüche, **dadurch gekennzeichnet, dass** der Abgasschalldämpfer als eine Vorrichtung zur Abgasnachbehandlung, umfassend ein Gehäuse, in dem mehrere Komponenten zur Abgasnachbehandlung untergebracht sind, die zumindest teilweise eine schalldämpfende Funktion umfassen, ausgebildet ist.

9. Fahrzeug, vorzugsweise Nutzfahrzeug (20), umfassend einen Abgasschalldämpfer (10) nach einem der vorherigen Ansprüche 1 bis 8.

10. Nutzfahrzeug (20) mit einem Tragrahmen (5), an dem ein Abgasschalldämpfer (10) nach einem der Ansprüche 1 bis 8 befestigt ist, wobei zusätzlich in einem Bereich seitlich und/oder oberhalb der Befestigungsstelle des Abgasschalldämpfers (10)
a) ein oder mehrere Griffelemente (8) und/oder
b) ein oder mehrere Holmelemente
am Fahrzeug angebracht sind.

## Claims

1. Exhaust gas sound absorber (10) for exhaust gas after-treatment for a vehicle, preferably commercial vehicle (20), wherein the exhaust gas sound absorber (10) comprises a tread surface (2), **characterized by** an outer wall (1) of the exhaust gas sound absorber (10), which has an indentation (3),
a) wherein, at the indentation (3), a lower wall portion is formed as the tread surface (2) and/or
b) wherein the tread surface (2) is mounted in a foldable or pivotable manner in the indentation (3); and/or
c) wherein the tread surface (2), preferably as a step tread, is fixedly mounted within the indentation (3).

2. Exhaust gas sound absorber (10) according to claim 1, **characterized in that** the indentation (3)
a) is formed as a cube-shaped cavity and/or
b) comprises a depth of at least 10 cm and/or
c) comprises a width of at least 10 cm.

3. Exhaust gas sound absorber (10) according to any one of the preceding claims, **characterized in that** the tread surface (2) is dimensioned such that at least the toe region of the sole of a human foot can be placed thereon.

4. Exhaust gas sound absorber (10) according to any one of the preceding claims, **characterized in that** the tread surface (2) comprises a surface for increasing slip resistance (4).

5. Exhaust gas sound absorber (10) according to claim 4, **characterized in that** the tread surface (2) comprises
a) a corrugated plate and/or
b) a chequer plate and/or
c) a lens plate and/or
d) a treadplate.

6. Exhaust gas sound absorber (10) according to any one of the preceding claims, **characterized in that** one or more shielding plates (6) are additionally attached to the outer wall (1).

7. Exhaust gas sound absorber (10) according to any one of the preceding claims, **characterized in that** the sound absorber (10) comprises a mounting device for fastening the exhaust gas sound absorber to a supporting structure of a vehicle.

8. Exhaust gas sound absorber (10) according to any one of the preceding claims, **characterized in that** the exhaust gas sound absorber is formed as a device for exhaust gas after-treatment, comprising a housing in which several components for exhaust gas after-treatment are accommodated which comprise at least partially a sound-absorbing function.

9. Vehicle, preferably commercial vehicle (20), comprising an exhaust gas sound absorber (10) according to any one of the preceding claims 1 to 8.

10. Commercial vehicle (20) having a supporting frame (5) to which an exhaust gas sound absorber (10) according to any one of claims 1 to 8 is fastened, wherein
a) one or more grip elements (8) and/or
b) one or more bar elements
are additionally attached to the vehicle in a region to the side and/or above the fastening point of the exhaust gas sound absorber (10).

## Revendications

1. Silencieux d'échappement (10) destiné au post-traitement de gaz d'échappement d'un véhicule, de préférence d'un véhicule utilitaire (20), le silencieux d'échappement (10) comportant une surface formant marche (2) ; **caractérisé par** une paroi extérieure (1) du silencieux d'échappement (10) qui comporte un creux (3),
a) dans le creux (3), une portion de paroi inférieure étant conçue comme surface formant marche (2) et/ou
b) la surface formant marche (2) étant montée de manière pliable ou pivotante dans le creux (3) et/ou
c) la surface formant marche (2) étant montée de manière fixe dans le creux (3), de préférence sous la forme d'une marche.

2. Silencieux d'échappement (10) selon la revendication 1, **caractérisé en ce que** le creux (3)
a) est conçu comme une cavité parallélépipédique et/ou
b) a une profondeur d'au moins 10 cm et/ou
c) a une largeur d'au moins 10 cm.

3. Silencieux d'échappement (10) selon l'une des revendications précédentes, **caractérisé en ce que** la surface formant marche (2) est dimensionnée de telle sorte qu'au moins la zone des orteils de la plante d'un pied humain puisse être posée sur celle-ci.

4. Silencieux d'échappement (10) selon l'une des revendications précédentes, **caractérisé en ce que** la surface formant marche (2) comprend une surface destinée à augmenter l'adhérence (4).

5. Silencieux d'échappement (10) selon la revendication 4, **caractérisé en ce que** la surface formant marche (2) comprend
a) une tôle cannelée et/ou
b) une tôle larmée et/ou
c) une tôle gaufrée et/ou
d) une tôle à boutons.

6. Silencieux d'échappement (10) selon l'une des revendications précédentes, **caractérisé en ce qu'**une ou plusieurs tôles de blindage (6) sont en outre fixées sur la paroi extérieure (1).

7. Silencieux d'échappement (10) selon l'une des revendications précédentes, **caractérisé en ce que** le silencieux d'échappement (10) comprend un module de montage destiné à fixer le silencieux d'échappement à une structure porteuse d'un véhicule.

8. Silencieux d'échappement (10) selon l'une des revendications précédentes, **caractérisé en ce que** le silencieux d'échappement est conçu comme un dispositif de post-traitement de gaz d'échappement qui comprend un boîtier dans lequel sont logés plusieurs composants de post-traitement de gaz d'échappement qui incluent au moins partiellement une fonction d'insonorisation.

9. Véhicule, de préférence véhicule utilitaire (20), comprenant un silencieux d'échappement (10) selon l'une des revendications précédentes 1 à 8.

10. Véhicule utilitaire (20) comprenant un châssis support (5) sur lequel est fixé un silencieux d'échappement (10) selon l'une des revendications 1 à 8, de plus
a) un ou plusieurs éléments de poignée (8) et/ou
b) un ou plusieurs éléments de longeron étant fixés au véhicule dans une zone située sur le côté et/ou au-dessus du point de fixation du silencieux d'échappement.
